# EUROPEAN PATENT APPLICATION

(11) **EP 2 109 292 A1**
(43) Date of publication of application: **14.10.2009**
(21) Application number: 08290342.8
(22) Date of filing: 08.04.2008
(51) Int. Cl.: H04L 29/08, H04L 29/12

(54) **Proxy device and associated server for GUP architecture**

(71) Applicant: Alcatel Lucent, 75008 Paris (FR)
(72) Inventor: Huyge, Wim, 3010 Kessel-Lo (BE); Verbandt, Hugo, 2170 Merksem (BE)
(74) Representative: BiiP cvba

(57) **Abstract**

The present invention relates to proxy device for use in a Generic User Profile architecture. The proxy device comprises means for receiving at least one Generic User Profile request from a server. The proxy device further comprises means for extracting addressing information indicative for the repository access function whereto the request should be delivered from the request and means for forwarding the request to the repository access function based on the addressing information.

## Description

### Field of the Invention

The present invention generally relates to providing access to a data repository and more in particular to providing access to Generic User Profile (GUP) data repositories through a Repository Access Function (RAF) in an environment according to the GUP architecture.

### Background of the Invention

The typical 3GPP mobile system is typically made up out of a large number of communication technologies and access technologies. Generally circuit-switched networks, packet-switched network, IP Multimedia Subsystem (IMS) networks, etc are involved in providing network access to the general public. The general public uses technologies such as Wireless LAN to access the mobile systems. However each of these systems typically has user-related data to store. For instance specific access rights of users to particular networks, accounting information, routing information, available services, etc. Such user-related data can be stored in various locations, for instance each of the networks may contain a node which stored user-related information for that specific network. This results in a distribution of the user-related data over various networks or entities.

It is however desirable to provide a unified interface which enables users, network operators, service providers, etc. to access and manage the user-related data in the various entities and to provide a system which enables data exchange between entities in a secure manner. The Generic User Profile (GUP) architecture defined by 3GPP provides such an interface and system.

In the GUP architecture, the user-related data is stored in a GUP Data Repository (GDR). A GDR which can be accessed via a Repository Access Function (RAF). In a typical GUP architecture, a GUP server is available to the users, network operators and service providers which can be used to interact with the RAF and thus with the GDR for retrieving information, storing information and modifying information. The GUP server provides an interface to users, network operators, service providers, etc. which is called the Rg interface in the 3GPP standard specification of GUP. The GUP further provides an interface towards the RAF which is called the Rp interface in the 3GPP standard specification of GUP.

For instance, a node in the communication network of a service provider sends a request for user-related data to the GUP server. Such a request can contain new user-related information such as information related to a new user, an update of information for an existing user or be a request to retrieve information from a GUP. This request will be received by the GUP server over the Rg interface. After processing the request, the GUP server is able to determine the GDR wherein the information is stored or should be stored and the GUP is able retrieve the requested information or forward the provided information to the appropriate GDR over the Rp interface. The RAF receives the request from the GUP server over the Rp interface and after processing the request, for instance after verification of the authentication and authorization of the GUP server or requesting entity, the RAF responds to the request.

In large communication networks such as those handling millions of subscribers, there are often a larger number of nodes providing services which require access to the GDR. To provide load balancing, redundancy, scalability, etc. certain nodes may be present more than once in the same communication network. For instance servers offering a particular service may be duplicated for redundancy and/or load sharing to handle an increase in active subscribers. If the GDR is duplicated over the network nodes, this also means that each network node requires it's own RAF. Multiple instances of a GDR can be beneficial as a large amount of user-related information requires a significant amount of storage. However, having a RAF for each GDR may be a waste of resources on the devices whereon the RAF and GDR are located. This also means that each new GDR requires a new RAF, which in turn increases the complexity of the overall network infrastructure and cost of operating the network.

Another problem in the classic GUP architecture is that each RAF has to provide an Rp-compliant interface which can be accessed by the GUP server. This means that applications or devices which are added to the GUP architecture have to be updated with an Rp-compliant interface. For instance existing database applications or systems need to be extended with a specific Rp-compliant interface which enables information storage and retrieval in that database. This makes the database application or system more complex and requires additional investment.

It is an objective of the present invention to provide a system which does not require an RAF for each GDR. It is another objective of the present invention to provide a system which scales with an increasing number of subscribers. It is yet another objective of the present invention to provide a GUP server which is able to interact with a GDR without its own RAF.

### Summary of the Invention

The drawbacks of the prior art are overcome and the objectives of the present invention are realized by a proxy device for use in a Generic User Profile architecture comprising means for receiving at least one Generic User Profile request from a server, characterized in that the proxy device comprises means for extracting addressing information from the request, the addressing information being indicative for the repository access function whereto the request should be delivered, and means for forwarding the request to the repository access function based on the addressing information.

Indeed, by having a proxy device in the GUP architecture, the GUP server no longer needs a direct connection to the RAF on a GDR to retrieve information from the GDR or store information in the GDR. The proxy device is able to receive the requests from the GUP server and can transmit the requests onto the GDR and an RAF instance which may be Rp-compliant or which may be non-Rp-compliant on the GDR. The advantage is that the GDR does not require a full-scale RAF but rather can provide a RAF instance which is used by the proxy device to retrieve information from the GDR or provide information to the GDR. Such RAF instance requires less intelligence than a full-scale RAF because it does not have to communicate to the GUP server over the Rp interface and thus does not have to process Rp specific headers and protocol. In general, the RAF instance is an access point to the GDR which can be used by the proxy device but which does not have to follow standard specifications related to the classic GUP Rp interface and thus replaces a full-scale RAF on a GDR in the classic GUP architecture.

However, in typical GUP architecture, the GUP server has a complete overview of which user-related data is stored in which GDR. Thus, the GUP server can have connections to multiple GDR instances and send requests and receive responses from these GDR instances. The general overview of all the user-related data and the location where data is stored has to be maintained in the GUP server to enable the GUP server to instruct the storage and retrieval of information from the appropriate GDR and to maintain the ability of the GUP server to organize information storage according to distribution policies. The proxy device therefore receives information concerning which GDR is involved in a particular request by receiving an identification or address for the RAF or RAF instance related to that particular GDR in the request. Each request originating from the GUP server which contains addressing information can be delivered to the appropriate RAF instance and GDR by the proxy device. The addressing information can be an address of a RAF instance or GDR such as an IP address, it can be a Uniform Resource Locator (URL) or any identification which uniquely identifies the RAF instance or GDR. Such a unique identification enables the proxy device to deliver the request at the appropriate RAF instance or GDR after extracting the addressing information from the request.

The GUP server may be unaware of the presence of the proxy device in the architecture. Once the GUP server has defined the addressing information in the request, it can transmit the request as in the classic GUP architecture. However instead of a RAF receiving the request, the request is now received by the proxy device which processes the request. However the GUP server does not notice such processing and thus the proxy device operates transparently to the GUP server. The GUP server is only aware of a proxy in a sense that it defines the addressing information. However if a GUP server always defines addressing information, regardless of the presence of any proxies, the proxy can operate transparently to the GUP server.

Optionally the proxy device according to the present invention further comprises means for mapping the request onto an internal message format.

In a classical GUP architecture, the messages received by the RAF are compliant to the Rp interface specification. However, because the GUP server can communicate with the proxy device according to the Rp interface specification, there is no need for communication according to the Rp interface between the proxy device and the RAF or RAF instance. By using an internal message format, the communication between the proxy device and the RAF or RAF instance can be simplified. For instance there communication can be reduced to a protocol which is not as extensive as the Rp interface. The GUP server cannot send such messages and therefore the proxy device translates requests into the internal message format and response from the internal message format into a format compliant to the Rp interface. In addition the proxy device may be able to convert messages to a multitude of internal message formats. This way the proxy server may be able to provide access for the GUP server to a GDR which has no Rp-compliant interface. This may for instance facilitate the integration of third part GDR applications in a communication network which do not provide an Rp-compliant interface. The advantage of such an internal message format is that it may be compliant to the interface offered by a database system or application, which means that such system or application can be used without modification. Only the proxy device needs to understand how Rp-compliant requests can be translated into requests which can be processed by the database system or application.

The internal message format can be any message format which is able to transport certain information such as which action is requested, parameters to such action, an identification of a particular user, etc. The internal message format may be formatted in extensible Markup Language (XML) or can be formatted in a proprietary way which is defined by the vendor of the proxy device or the service provider or network operator. For instance the internal message format may consist of a data packet containing particular header fields which specify the request and the parameters to the request. Similarly the internal message format also provides a formatting of responses which generally will be similar to the requests. For instance a response may also comprise information such as the result of a requested action, error messages, requested information, an identification of a user, etc.

Optionally the proxy device according to the present invention is adapted for distributing and/or replicating the request over a plurality of repository access functions.

In addition to forwarding requests from the GUP server to the appropriate RAF or RAF instance, the proxy device may also distribute and/or replicate requests over multiple RAF or RAF instances. By replicating the requests, the proxy device is able to create multiple copies of the same user-related information in more than one GDR. Thus, if a GDR is unavailable or the data stored thereon is corrupted, there is a back-up copy of the user-related data available in another GDR. The proxy device may keep track of which information can be stored where to achieve a good usage of available storage in the GDR or the GUP server may determine which information is stored where. Distributing requests over more than one GDR allows for load-balancing by the proxy node. For instance, if information is replicated over a number of GDR nodes, the proxy device can forward a request for information retrieval to a GDR node with a low load. Similarly, the proxy device may be able to store new user-related data in a GDR with a low load to achieve load-balancing or reduce the load on certain nodes.

Alternatively the GUP server is able to determine how information should be distributed and duplicated across several GDR. The GUP server typically is able to perform such distribution based on policies and may thus be able to instruct the proxy device where information has to be stored and whereto information has to be duplicated. However, it is also possible that the GUP server is unaware of any information distribution or replication. In such case, the proxy device is responsible for determine which information goes where.

Optionally the means for extracting addressing information in the proxy device according to the present invention are adapted to extract the addressing information from a header in the request.

Further optionally the header is a Simple Object Access Protocol or SOAP header.

Headers are typically used to transport information related to addressing the destination of a data packet or request message as alternative to transporting the information in the payload of the message or data packet. In particular SOAP headers are used in the classic GUP architecture. It is therefore beneficial to insert the addressing information in the SOAP headers to transport the addressing information in order to use a proxy device according to the present invention. Using SOAP headers means that the existing messages can carry headers similar to the classic SOAP headers in the GUP architecture but also containing the addressing information, rather than creating a complete new set of header fields especially for addressing information and proxy device usage. Adding support for the addressing information in the existing SOAP headers to the GUP server requires less effort in implementation than for instance creating a new header format for the addressing information. Of course, it is still possible to use an additional header which is not a SOAP header or an extension of the existing header fields.

Optionally the request is one of the following:
- a create component request;
- a delete component request;
- a modify component request;
- a query component request;
- a subscribe component request; and

Further optionally the request is an Rp-interface compliant request.

The requests listed above are typical operations related to user profile management and in a GUP architecture are typically transported in Rp-interface compliant request messages as defined in the TS 23.240 GUP requirements specified by 3GPP. Requests such as create and modify enable an application, a user, a service provider or a network operator to create a new user in the GDR, add new information fields for a particular user or all users or enables them to change the values of one or more fields for a particular user or a set of users. A delete request can be used to remove a particular information field for a specific user, a set of users or even to remove a user or set of users completely from the GDR. Requests such as query requests and subscribe requests can be used to retrieve information from the GDR. A query request specifies which information relating to a particular user or set of user should be retrieved from the GDR and delivered to the requesting application, user, service provider or network operator.

In order for the proxy device to function in a GUP architecture, it should be able to process such requests and provide an appropriate response to each request. The proxy device may communicate with one or more RAF or GDR to obtain information or to make requested changes such as adding a user or changing the value of particular information fields in a user's profile. In addition to being able to process such requests to provide a response, the proxy device may also be able to translate the messages to an internal message format because the proxy device is able to extract the required information from the request in order to formulate messages in a different format.

The objectives of the present invention are further realized and the drawbacks of the prior art are also overcome by a Generic User Profile server for use in a Generic User Profile architecture comprising means for receiving a request from one or more users and/or applications and means for sending the request to a repository access function, characterized in that the Generic User Profile server further comprises means for inserting addressing information into the request, the addressing information being indicative for the repository access function whereto the request should be delivered.

As described above, the proxy device receives addressing information from the GUP server in order to determine where particular user-related information should be stored, modified or be retrieved from. This means that the server has to be able to provide such information to the proxy device. The GUP server is able to do so with means for inserting the addressing information into a request message. For instance, the GUP server may be able to add additional header fields to a request or set values for particular header fields in the request which can serve as addressing information. Alternatively, the GUP server may be able to modify the payload of the request message to transport the addressing information in the payload.

In general, a GUP server can be extended to support the proxy device according to the present invention by modifying the way how requests are created and sent from the GUP server to the RAF. If this creation process is modified with a step of adding the addressing information along with other information to the requests, the GUP server can send a request which can be processed by the proxy device. Thus, by adapting the GUP server with the means for adding addressing information, the objectives of the present invention can be realized as describe above. In addition, the GUP server is unaware of how a proxy device processes and handles the requests or where the responses originate from. Thus the operation of the proxy device is transparent to the GUP server, especially when a GUP server is configured to always insert addressing information, regardless of the need thereof.

The present invention further relates to a method for processing a Generic User Profile request received by a proxy device from a Generic User Profile server, characterized in that the method comprises the steps of:
- receiving the request;
- extracting addressing information from the request, the addressing information being indicative for the repository access function whereto the request should be delivered; and
- forwarding the request based on said the addressing information.

### Brief Description of the Drawings

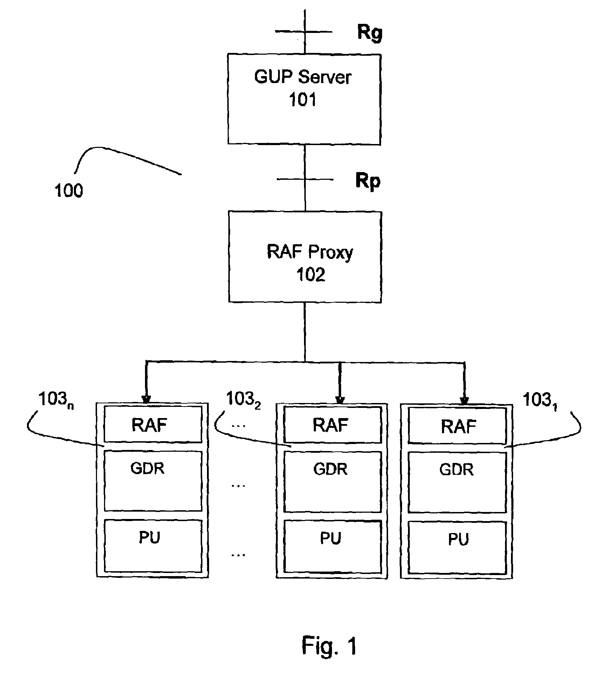

Fig. 1 illustrates an overview of a Generic User Profile architecture incorporating an embodiment of a proxy device according to the present invention.

### Detailed Description of Embodiment(s)

Fig. 1 illustrates a GUP architecture 100 with a GUP server 101, a proxy device 102 and a number of nodes 103₁ to 103ₙ which comprise an RAF interface, a GDR and one or more processing units (PU). The lines in Fig. 1 illustrate the connection between the GUP server 101, the RAF proxy 102 and the various nodes 103₁ to 103ₙ. In one embodiment, these lines may represent the physical link between the various elements. However, in a typical situation, the physical connections between the elements are much more complex and can consist of a large number of network nodes such as routers, switches, gateways, etc. The lines connecting the elements in Fig. 1 should therefore be considered as logical connections rather than physical connections. A logical connection indicates that there is a way of transporting data from one element to another element. Of course, there may be other logical connections which are not shown such as a direct connection between the nodes 103₁ to 103ₙ and the GUP server 101.

The GUP server 101 can be accessed by applications executed on nodes in a network via the Rg-interface as defined in TS 23.240 by 3GPP. The Rg-interface determines how the GUP server 101 can be accessed and how particular actions can be triggered from the GUP server 101. Typically nodes in a network will send Rg-interface compliant messages to the GUP server 101 which in turn processes these messages. The GUP server 101 further has an Rp-interface as defined in TS 23.240 by 3GPP to interact with RAF nodes. However, in this particular example the RAF node is not a classic RAF node but rather a RAF proxy 102. To ensure that the RAF proxy 102 is able to handle the requests sent by the GUP server 101 over the Rp-interface, the GUP server 101 inserts addressing information into the request messages. The addressing information indicates which of the nodes 103₁ to 103ₙ should receive the request or should handle the request.

The RAF proxy 102 terminates the Rp-interface which means that it receives the Rp-interface compliant messages from the GUP server 101 and processes these messages. Typically these messages will be requests to perform certain operations such as creating or deleting user-related information or user profiles, modifying elements in user profiles, retrieving information from user profiles, etc. The RAF proxy 102 further retrieves addressing information from the request messages in order to determine which of the nodes 103₁ to 103ₙ has to handle the request or contains the information needed. In addition, the RAF proxy 102 may duplicate the message to other nodes of 1031 to 103n based on distribution policies, load of the nodes, back-up policies, etc. Alternatively, the GUP server 101 provides information relates to the duplication and/or distribution of information and requests over the nodes 103₁ to 103ₙ.

The nodes 103₁ to 103ₙ comprise a RAF interface, a GDR and one or more PU's. The RAF interface provides an access to the GDR to the RAF proxy 102, similar to the RAF in a classic GUP architecture. However the RAF interface in this particular embodiment is not a complete RAF but rather only an access point which enables retrieval of information from the GDR and storing or adapting information in the GDR. The processing units are optional elements in the nodes which represent applications which process data and make use of the GDR. Each node may have one or more PU's.

Responses to requests made by the GUP server 102 can be generated by a PU, the RAF instance or the RAF proxy 102. For instance, if information is retrieved from the GDR, the RAF instance may provide that information to the proxy 102 which in turn generates a response message containing the information for the GUP server 101. Alternatively the RAF instance generates the response message and sends it to the GUP server 101 directly or via the proxy 102.

It should be noted that although Fig. 1 only illustrates a single RAF proxy, it is possible to have several proxy devices in a communication network. For instance when GDR nodes are spread over several physical locations, there may be a proxy node at each physical location and a single GUP server which distributes requests to the appropriate proxies. In addition, a proxy can receive requests from more than one GUP server via the Rp-interface. There may also be more than three nodes which are shown in Fig. 1 and these nodes may comprise a single, multiple or no processing unites. Furthermore certain nodes may comprise multiple GDR databases which are all connected to a single RAF instance. The nodes 1031 to 103n may consist of a single physical device whereon each of the RAF instance, GDR and PU are executed or may consist of a plurality of physical devices providing certain functionality.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit ad scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned.

## Claims

1. A proxy device for use in a Generic User Profile architecture comprising means for receiving at least one Generic User Profile request from a server, **characterized in that** said proxy device comprises means for extracting addressing information from said request, said addressing information being indicative for the repository access function whereto the request should be delivered, and means for forwarding said request to said repository access function based on said addressing information.

2. The proxy device as defined in claim 1, **characterized in that** said proxy device further comprises means for mapping said request onto an internal message format.

3. The proxy device as defined in claim 1, **characterized in that** said proxy device is adapted for distributing and/or replicating said request over a plurality of repository access functions.

4. The proxy device as defined in claim 1, **characterized in that** said means for extracting addressing information are adapted to extract said addressing information from a header in said request.

5. The proxy device as defined in claim 4, **characterized in that** said header is a Simple Object Access Protocol or SOAP header.

6. The proxy device as defined in claim 1, **characterized in that** said request is one of the following:
- a create component request;
- a delete component request;
- a modify component request;
- a query component request;
- a subscribe component request; and

7. The proxy device as defined in claim 1, **characterized in that** said request is an Rp-interface compliant request.

8. A Generic User Profile server for use in a Generic User Profile architecture comprising means for receiving a request from one or more users and/or applications and means for sending said request to a repository access function, **characterized in that** said Generic User Profile server further comprises means for inserting addressing information into said request, said addressing information being indicative for the repository access function whereto said request should be delivered.

9. A method for processing a Generic User Profile request received by a proxy device from a Generic User Profile server, **characterized in that** said method comprises the steps of:
- receiving said request;
- extracting addressing information from said request, said addressing information being indicative for the repository access function whereto said request should be delivered; and
- forwarding said request based on said addressing information.
